(19) **Europäisches Patentamt / European Patent Office / Office européen des brevets**

(11) **EP 1 723 345 B1**

(12) **EUROPÄISCHE PATENTSCHRIFT**

(45) Veröffentlichungstag und Bekanntmachung des Hinweises auf die Patenterteilung:
**24.09.2008 Patentblatt 2008/39**

(21) Anmeldenummer: **05701057.1**

(22) Anmeldetag: **20.01.2005**

(51) Int Cl.:
*F16D 3/38* (2006.01)    *F16D 3/41* (2006.01)

(86) Internationale Anmeldenummer:
**PCT/EP2005/000508**

(87) Internationale Veröffentlichungsnummer:
**WO 2005/073580 (11.08.2005 Gazette 2005/32)**

(54) **KREUZGELENKANORDNUNG**

UNIVERSAL JOINT SYSTEM

SYSTEME DE JOINT UNIVERSEL

(84) Benannte Vertragsstaaten:
**DE FR IT**

(30) Priorität: **02.02.2004 DE 102004005185**
**07.04.2004 DE 102004017104**

(43) Veröffentlichungstag der Anmeldung:
**22.11.2006 Patentblatt 2006/47**

(73) Patentinhaber: **Voith Turbo GmbH & Co. KG**
**89522 Heidenheim (DE)**

(72) Erfinder: **GRAWENHOF, Peter**
**89547 Dettingen (DE)**

(74) Vertreter: **Dr. Weitzel & Partner**
**Friedenstrasse 10**
**89522 Heidenheim (DE)**

(56) Entgegenhaltungen:
**EP-A- 0 206 026      DE-A1- 10 037 866**
**DE-A1- 10 107 606**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Kreuzgelenkanordnung, im Einzelnen mit den Merkmalen aus dem Oberbegriff des Anspruches 1.

Kreuzgelenkanordnungen für den Einsatz in Gelenkwellen für unterschiedliche Einsatzzwecke sind in verschiedenen Ausführungen aus dem Stand der Technik vorbekannt. Diese umfassen einen Flanschmitnehmer mit zwei Gelenkgabelhälften und ein Zapfenkreuz. Die Flanschmitnehmer können wiederum verschiedenartig ausgeführt sein. Dabei sind Ausführungsformen von Flanschmitnehmem in geteilter Form im Bereich des Fußteiles vorbekannt. Stellvertretend wird dabei auf die nachfolgend genannten Druckschriften verwiesen:

1. EP 0 206 026 A1
2. DE 43 13 141 C2
3. DE 100 37 866 A1

Diese ermöglichen die Gestaltung einteiliger und formstabiler Lageraugen, die wie bei einer ungeteilten Gelenkgabel Bestandteil des angrenzenden Gabelarmes bleiben, über den die Kraftübertragung zur Lagerbohrung stattfindet. Auf diese Weise erfolgt keine Unterbrechung des Kraftflusses an den spezifisch höchst beanspruchten Stellen der Gelenkgabel. Die in der Symmetrieebene zwischen den Lagerbohrungen und der Gelenkgabel angeordnete Trennstelle liegt im Bereich niedriger Beanspruchung, welche kaum Einfluss auf die Kraftübertragung besitzt. Diese Anordnungen bieten den Vorteil einer guten Einbettung der Lagerung in der Lagerbohrung, einer sehr leichten Montage sowie einer Erhöhung der Drehmomentenkapazität und Lagertragfähigkeit. Gleichzeitig bieten geteilt ausgeführte Gelenkgabeln erhebliche Vorteile bei der Rohteilgestaltung und Bearbeitung. Bei der in der EP 0 206 026 A1 beschriebenen Ausführung weisen die Gelenkgabelhälften jeweils einen Flanschteil auf, der an seiner von der Zapfenkreuzachse weggerichteten Seite Formschlusselemente aufweist, so dass mit der angetriebenen bzw. der anzutreibenden Welle bzw. dem mit der Gelenkgabelhälfte zu koppelnden Wellenstrang eine formschlüssige Verbindung eingegangen wird. Zusätzlich sind lösbare Verbindungen zwischen dem Flanschteil und dem jeweiligen Anschlusselement, vorzugsweise in Form eines Wellenstranges, vorgesehen, beispielsweise mittels Dehnschrauben. Die an den Gelenkgabelhälften ausgebildeten Koppelflächen sind im Wesentlichen parallel zueinander angeordnet und weisen im mittleren Bereich einander gegenüberstehende Keilnuten auf. In diesen Keilnuten sind Keile in viereckiger Form eingelassen. Diese dienen vor allem der Verhinderung der Verschiebung der einzelnen Gelenkgabelhälften gegeneinander parallel zur Zapfenachse des jeweils in der Gelenkgabel gelagerten Zapfens. Eine Vermeidung der Relativbewegung der Gelenkgabelhälften senkrecht zur Zapfenachse ist mit dieser Lösung nicht realisierbar. Auch können die Gelenkgabelhälften nicht gegeneinander vorgespannt werden. Insbesondere im Reversierbetrieb kommt es daher stellenweise zum Abheben einzelner Bereiche der Gelenkgabelhälften unter dem Einfluss der Umfangskraft. Das Abheben bewirkt eine Relativbewegung der Formschlusselemente gegen die Aussparungen an den anschließenden Wellensträngen, was wiederum zum Entstehen von Hohlräumen führt, in dem sich Feuchtigkeit und Kriechwasser ansammeln kann. Die Folge sind Korrosionserscheinungen, die durch die Mikrobewegungen der Gelenkgabelhälften noch forciert werden. Gerade beim Einsatz in Schwerstgelenkwellen muss diese Problematik aufgrund der hohen Umfangskräfte berücksichtigt werden. Zur Lösung wird dabei gemäß der DE 43 13 141 C2 eine Ausführung mit Hirth-Stirnverzahnung an der Flanschunterseite sowie eine Verzahnung im Bereich der Trennflächen zur Realisierung einer formschlüssigen Verbindung zwischen beiden Gelenkgabelhälften vorgeschlagen. Die Verzahnung, welche vorzugsweise als gerade Stirnverzahnung mit schrägen Flanken ausgeführt ist, ist derart gestaltet, dass bei Verlängerung der Flankenlinie der Verzahnung oder bei gewählter Bogenverzahnung der Sekante durch beide Endpunkte der Flankenlinie ein Winkel von > 0 Grad bis < 80 Grad mit einer Ebene, die von der Gelenkachse und der Zapfenachse aufgespannt wird, bildet. Die Gelenkachse liegt in der Regel in der Symmetrieebene zwischen den beiden Gelenkgabelhälften und steht senkrecht zur Zapfenachse des in der Gelenkgabel gelagerten Zapfens. Unter Gelenkachse wird dabei die Rotationsachse verstanden, welche mit der Rotationsachse einer Gelenkwelle zusammenfällt. Durch die Verspannung der Flanken wird eine Relativbewegung zwischen den Gelenkgabelhälften senkrecht zur Zapfenachse nahezu ausgeschlossen. Allerdings besteht auch bei dieser Ausführung nach längerer Betriebsdauer die Gefahr von kleinen Rissen am Zahngrund. Insbesondere bei Ausführungen von Flanschmitnehmern mit geschlossenem Gabelauge, d.h. Ausführungen der Lagerteile mit Blindbohrung zur Aufnahme der Lageranordnung für das Zapfenkreuz, welche für die Übertragung von noch höheren Momenten bestimmt sind, besteht eine besondere Gefährdung. Daher wird in der Druckschrift DE 100 37 866 A1 vorgeschlagen, die aus der Druckschrift DE 43 13 141 C2 beschriebene Verzahnung nur im radial außenliegenden Bereich der Koppelflächen zwischen den beiden Gelenkgabelhälften, bezogen auf die Gelenkgabelachse, anzuordnen und zusätzlich eine weitere zweite Verzahnung in den stärker beanspruchten Bereichen vorzusehen, die dadurch charakterisiert ist, dass diese in einem Winkel zur ersten Verzahnung ausgerichtet ist. Diese ist vorzugsweise dadurch charakterisiert, dass die Verlängerungen einer oder mehrerer Flankenlinien oder - bei Ausführung als Bogenverzahnung - die Verlängerungen einer Sekante durch die Endpunkte einer Flankenlinie der zweiten Verzahnung in einem Winkel zwischen 70 Grad und 110 Grad zur Verlängerung der Flankenlinien der ersten Verzahnung angeordnet ist. Vorzugsweise sind die Flankenlinien bzw. deren Verlängerungen und bei Bogenverzahnung die Sekanten durch die Endpunkte der Flankenlinien im Wesentlichen senkrecht zu den Flankenlinien bzw. den Sekanten der ersten Verzahnung ausgerichtet. Ferner sind Mittel zur Verspannung der beiden Gelenkgabelhälften gegeneinander vorgesehen.

Gerade bei hoch beanspruchten Kreuzgelenkanordnungen, wie dies für den Einsatz von Schwerstgelenkwellen, beispielsweise zum Antrieb von Walzwerken, der Fall ist, ist es besonders wichtig, die gesamte Kreuzgelenkanordnung hinsichtlich ihrer Dimensionierung und Auslegung auch an die Belastung anzupassen, um eine möglichst hohe Standzeit zu erzielen. Die genannten Maßnahmen an den Koppelflächen im Hinblick auf die Verbindung zu den Anschlusselementen können dabei ein Bestandteil sein, reichen jedoch in der Regel nicht aus, da gerade die hoch belasteten Bereiche entsprechend auszugestalten sind, was sich wiederum in einer Vergrößerung des Bauraumbedarfes niederschlägt, insbesondere in einer Vergrößerung der Kreuzgelenkdurchmesser.

Der Erfindung liegt daher die Aufgabe zugrunde, eine Kreuzgelenkanordnung für den Einsatz in Gelenkwellen, insbesondere Schwerstgelenkwellen, zu schaffen, die zum einen durch einen im Hinblick auf die auftretenden Belastungen geringen Bauraumbedarf charakterisiert ist und ferner durch eine einfache Herstellung und Montage. Der Optimierungsaufwand soll möglichst minimiert werden.

Die erfindungsgemäße Lösung ist durch die Merkmale des Anspruchs 1 charakterisiert. Vorteilhafte Ausgestaltungen sind in den Unteransprüchen beschrieben.

Erfindungsgemäß ist die Kreuzgelenkanordnung für den Einsatz in Gelenkwellen, insbesondere Schwerstgelenkwellen, durch eine Mehrzahl von Merkmalen charakterisiert, die in ihrer Kombination besonders vorteilhafte Eigenschaften ermöglichen. Die Kreuzgelenkanordnung umfasst ein Zapfenkreuz, welches in zwei um 90 Grad zueinander versetzt angeordneten Gelenkgabeln gelagert ist. Jede Gelenkgabel umfasst zwei Gelenkgabelteile, wobei jeder Gelenkgabelteil einen Fußteil und einen Lagerteil zur Aufnahme der Lagerung der Zapfen des Zapfenkreuzes umfasst. Die Gelenkgabelteile sind im Bereich ihrer Fußteile in Koppelflächen bildenden Koppelbereichen formschlüssig miteinander verbindbar. Die Fußteile der Gelenkgabelteile weisen an ihrer zum Fußteil des jeweils anderen Gelenkgabelteils im Bereich des Außenumfanges weisenden Koppelflächen eine zueinander komplementäre erste Verzahnung auf. Die Verlängerung mindestens einer die erste Verzahnung charakterisierenden Flankenlinie an der Koppelfläche oder bei einer Bogenverzahnung die Verlängerung der Sekante durch die Endpunkte der Flankenlinie bilden einen Winkel von > 0 Grad bis < 180 Grad mit einer Ebene, welche durch die Zapfenachse des im Gelenkgabelteil gelagerten Zapfens und einer mit einer Rotationsachse der Gelenkgabel zusammenfallenden Gelenkgabelachse gebildet wird. Ferner ist an den zueinander weisenden Koppelflächen im Bereich der Gelenkgabelachse eine weitere zweite Verzahnung vorgesehen. Diese verläuft in einem Winkel zur ersten Verzahnung. Insbesondere sind die Verlängerungen der die Ausrichtung der Verzahnung beschreibenden Flankenlinien oder bei Ausführung als Bogenverzahnung die Verlängerung einer Sekante durch die Endpunkte einer Flankenlinie der zweiten Verzahnung in einem Winkel zwischen einschließlich 70 Grad und 110 Grad zur Verlängerung der Flankenlinien durch die erste Verzahnung oder bei einer Bogenverzahnung zur Verlängerung einer Sekante durch die Endpunkte einer Flankenlinie der ersten Verzahnung angeordnet. Der einzelne Fußteil ist dabei erfindungsgemäß als Vollflansch ausgeführt und schließt sich frei von Absätzen an den Lagerteil an. Dadurch wird es möglich, die einzelne Gelenkgabelhälfte bzw. die Gelenkgabel als Gussteil in besonders kompakter Bauform frei von Hinterschnitten oder anderen Absätzen zu fertigen. Die höchst belasteten Bereiche sind dadurch durch eine entsprechende Materialdicke charakterisiert, die sich allein durch die Ausbildung als Vollflansch ergibt, so dass gegenüber den bekannten Gelenkgabelausführungen keine zusätzlichen Maßnahmen erforderlich sind, sondern hier bereits die positiven Eigenschaften mit der Formgebung gegeben sind. Der Anteil der verzahnten Fläche wird größer und die Mittel zur Verspannung der beiden Gelenkgabelteile einer Gelenkgabel wird in den Schwerpunktbereich der Verzahnung verlegt. Damit erfolgt die Verspannung bezogen auf die Gelenkgabelachse G in radialer Richtung, d. h. senkrecht zu dieser bzw. parallel zur Zapfenachse des in der Gelenkgabel gelagerten Zapfens. Die Mittel zur Verspannung sind dann ebenfalls in den später ausgelegten Bereichen angeordnet und liegen nicht mehr, wie im Stand der Technik mit Flanschausbildung, verengten und damit höchstbeanspruchten Bereich. Die Mittel umfassen im einfachsten Fall Koppelschrauben. Die Koppelschrauben im Zentrum der Verzahnung bewirken, gegenüber der Ausführung aus dem Stand der Technik, eine gleichmäßige Belastung der Verzahnung und Ausnutzung der Schraubenkapazität. Bei gleichbleibendem Durchmesser ist die so gestaltete Gelenkgabelhälfte höher belastbar.

Bezüglich der Ausrichtung der Verzahnungen bestehen eine Vielzahl von Möglichkeiten. Vorzugsweise werden die Verlängerungen der Flankenlinien der ersten Verzahnung oder bei einer Bogenverzahnung der Sekante durch die Endpunkte der Flankenlinie senkrecht zu einer Ebene ausgerichtet, welche durch die Zapfenachse des in der Gelenkgabel gelagerten Zapfens und einer mit der Rotationsachse der Gelenkgabel zusammenfallenden Gelenkgabelachse gebildet wird, verläuft. Relativbewegungen im Mikrobereich können somit in diesen beiden Richtungen gegeneinander ausgeschlossen werden.

Das Zapfenkreuz selbst umfasst zwei zueinander um 90 Grad versetzt angeordnete Zapfenanordnungen aus zwei um 180 Grad zueinander versetzt und auf einer gemeinsamen Achse angeordneten Zapfen, die in zueinander parallelen Ebenen angeordnet sind. Die Lagerung der Zapfen in der Gelenkgabelhälfte erfolgt in den einzelnen Lagerteilen der Gelenkgabelhälfte, wobei zur Aufnahme der Zapfen diese mit einer Blindbohrung ausgeführt ist. Durch den Veratz der Zapfenebenen wird Bauraum für eine noch steifere Lagerumgebung frei. Dieser ermöglicht es, Lager und Zapfenkreuze mit noch größerem Durchmesser zu realisieren. Ferner taucht die Gabel des komplementären Flanschmitnehmers, d. h. die Gelenkgabel für die jeweils andere Zapfenanordnung des Zapfenkreuzes nicht so tief ein, so das sich wiederum zusätzlicher Bauraum für die Verzahnung ergibt. Der Achsversatz zweier Zapfenanordnungen einer Kreuzgelenkgabel mit in verschiedenen Ebenen versetzt angeordneten Zapfen, wobei jeweils zwei um 180° zueinander versetzte Zapfen eine Zapfenanordnung bilden und durch eine gemeinsame Zapfenachse charakterisiert sind, liegt in einem Bereich von einschließlich $\dfrac{Rota}{5}$ bis $\dfrac{Rota}{7}$ wobei Rota den Rotationsdurchmesser der Kreuzgelenkanordnung charakterisiert. Dadurch wird für die Lagerung eine steife Anschlusskonstruktion gewährleistet, die insbesondere den Anforderungen an die Übertragung sehr hoher Drehmomente gerecht wird und Verformungen gerade im Bereich der Lageraugen, die sich auf die Tragfähigkeit der Lager besonders nachteilig auswirken, weitestgehend vermeidet.

Bezüglich der konkreten Anordnung der Koppelflächen bestehen ebenfalls eine Mehrzahl von Möglichkeiten, vorzugsweise werden die Koppelflächen der ersten und zweiten Verzahnung eines jeden Gelenkgabelteils in einer gemeinsamen Ebene angeordnet. Denkbar ist jedoch auch ein Versatz, d. h. eine Anordnung in zueinander parallelen Ebenen oder aber in Ebenen, die einen Winkel einnehmen. Gemäß einer besonders vorteilhaften Ausführung wird jedoch eine Variante mit Ausgestaltung beider Verzahnungen an einem Gelenkgabelteil in einer Ebene gewählt, da diese Lösung sich durch den geringsten fertigungstechnischen Aufwand auszeichnet.

Erfindungsgemäß trägt ferner jeder einzelne Fußteil an der vom Lagerteil wegweisenden Stirnseite des Fußteiles Mittel zur Kopplung mit komplementären Mitteln am Anschlusselement zur Drehmomentübertragung auf das Anschlusselement und zur Zentrierung von Anschlusselement und Gelenkgabelhälfte zur Vermeidung einer Relativbewegung in einer Ebene, die im Koppelbereich zwischen den Gelenkgabelteilen und Anschlusselement liegt und senkrecht zur Ebene, welche von der Zapfenachse des im Gelenkgabelteil gelagerten Zapfens und der mit der Rotationsachse der Gelenkgabel zusammenfallenden Gelenkgabelachse gebildet wird, ausgerichtet ist. Die Mittel sind wenigstens segmentweise über den gesamten Umfang an der vom Lagerteil wegweisenden Stirnseite des Fußteiles ausgebildet und umfassen dort eine axial ausgerichtete und in radialer Richtung verlaufende Stirnverzahnung. Ferner umfassen die Mittel vorzugsweise Gewinde tragende Blindbohrungen am Fußteil, die parallel zur Gabelachse ausgerichtet sind. Zusätzlich ist wenigstens ein Verbindungsmittel zur Verspannung der beiden Gelenkgabelhälften in axialer Richtung, d. h. gegeneinander, vorgesehen. Dieses erstreckt sich durch den Vollflansch. Erfindungsgemäß sind die Verbindungsmittel ins Zentrum der zweiten Verzahnung verlegt, so dass sich in besonders vorteilhafter Weise beim Verspannen eine gleichmäßige Belastung der Verzahnung ergibt.

Erfindungsgemäß wird somit der theoretisch zur Drehmomentübertragung zur Verfügung stehende Raum, der sich durch die Kontur einer Kreuzgelenkanordnung ergibt, in optimaler Weise durch Ausbildung als quasi Vollelement ausgenutzt. Dadurch wird es möglich, mit gleichem zur Verfügung stehendem Bauraum größere Momente bei gleichbleibender oder höherer Standzeit zu übertragen.

Die erfindungsgemäße Lösung wird nachfolgend anhand von Figuren erläutert. Darin ist im Einzelnen folgendes dargestellt:

Figur 1    verdeutlicht in schematisch vereinfachter Darstellung den Aufbau einer erfindungsgemäß gestalteten Kreuzgelenkanordnung für den Einsatz in Schwerstgelenkwellen;

Figur 2    verdeutlicht die Ausbildung des erfindungsgemäß gestalteten Zapfenkreuzes;

Figur 3    verdeutlicht die Ausgestaltung gemäß Figur 1 in demontiertem Zustand.

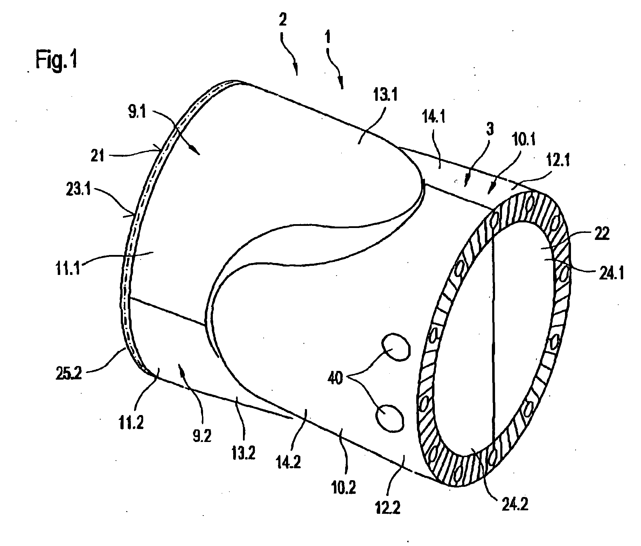

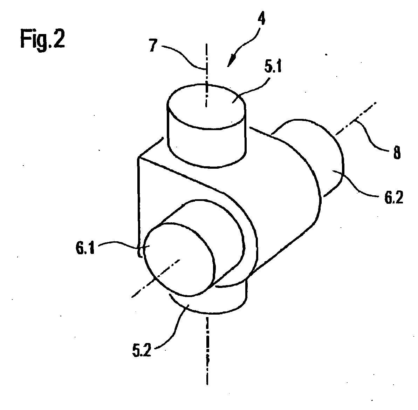

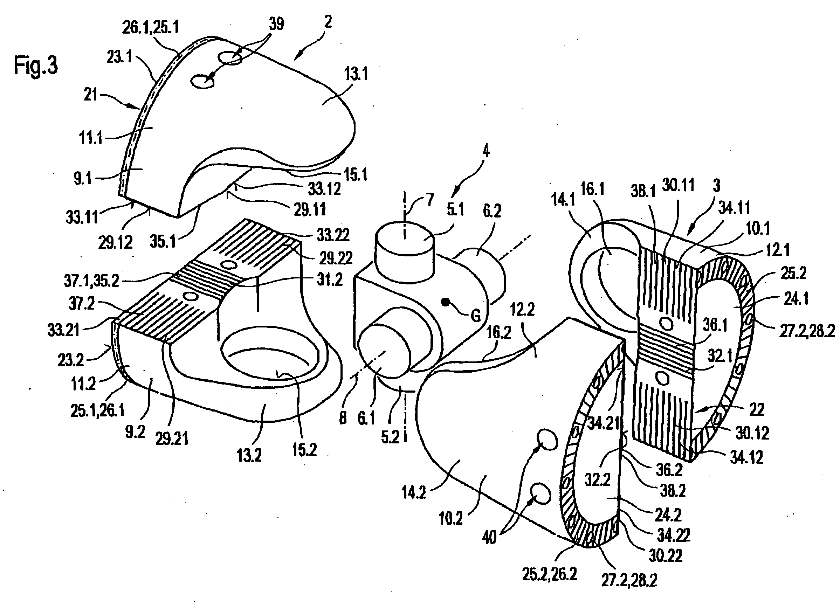

Die Figur 1 verdeutlicht in schematisch vereinfachter Darstellung den Aufbau einer Kreuzgelenkanordnung 1 für den Einsatz in Schwerstgelenkwellen. Diese ist im demontierten Zustand ohne Lageranordnung in Figur 3 wiedergegeben. Die Kreuzgelenkanordnung 1 umfasst zwei um 90° zueinander versetzt angeordnete Gelenkgabeln 2 und 3, die der Lagerung eines Zapfenkreuzes 4 dienen. Das Zapfenkreuz 4 ist erfingdungsgemäß als Zapfenkreuz mit in versetzten Ebenen angeordneten Zapfen ausgeführt. Die Ebenen sind parallel angeordnet. Das Zapfenkreuz 4 ist in schematisch vereinfachter Darstellung in Figur 2 wiedergegeben. Dieses umfasst jeweils zwei um 180° zueinander versetzt angeordnete und jeweils eine Zapfenanordnung bildende Zapfen 5.1, 5.2 und 6.1, 6.2, wobei beide Zapfen 5.1, 5.2 einer ersten Zapfenanordnung und 6.1, 6.2 einer zweiten Zapfenanordnung auf einer gemeinsamen Zapfenachse 7 bzw. 8 angeordnet sind. Die beiden Zapfenachsen 7 und 8 sind dabei um 90° zueinander versetzt angeordnet und in parallelen Ebenen angeordnet. Das Zapfenkreuz 4 kann dabei einteilig ausgeführt sein oder aber aus zwei miteinander zur baulichen Einheit Zapfenkreuz 4 zusammengefassten Einzelteilen bestehen, wobei jedes Einzelteil durch ein auf einer Zapfenachse 7 bzw. 8 angeordnetes die jeweilige Zapfenanordnung bildendes Zapfenpaar aus den Zapfen 5.1, 5.2 bzw. 6.1 und 6.2 charakterisiert ist. Jede Gelenkgabel 2, 3 ist ferner in geteilter Ausführung ausgebildet. Diese umfasst zwei Gelenkgabelteile 9.1, 9.2 für die Gelenkgabel 2 und 10.1. und 10.2 für die Gelenkgabel 3, vorzugsweise in Form von Gelenkgabelhälften. Jeder Gabelteil 9.1, 9.2 bzw. 10.1, 10.3 umfasst einen Flanschteil 11.1 für den Gabelteil 9.1 und 11.2 für den Gabelteil 9.2 sowie 12.1 für den Gabelteil 10.1 und 12.2 für den Gabelteil 10.2. An die Flanschteile 11.1, 11.2 bzw. 12.1, 12.2 schließen sich Lagerteile 13.1, 13.2, 14.1, 14.2 an. Jeder Lagerteil trägt eine Blindbohrung 15.1 bzw. 15.2 zur Lagerung der Zapfen 5.1 und 5.2 und 16.1, 16.2 für die Zapfen 6.1, 6.2 des Zapfenkreuzes 4. Die Flanschteile 11.1, 11.2 und 12.1, 12.2 sind dabei erfindungsgemäß als Vollflansch ausgebildet. Dies bedeutet, dass im Bereich des Außendurchmessers bzw. im Bereich des Außenumfanges das einzelne Flanschteil 11.1, 11.2 bzw. 12.1, 12.2 direkt in den Lagerteil 13.1 bzw. 13.2 übergeht frei von einem Absatz. Eine örtliche Einschnürung oder Abstufung gegenüber dem Lagerteil 13.1, 13.2 bzw. 14.1, 14.2 ist nicht vorgesehen. Die konkrete Ausgestaltung im demontierten Zustand für die Gelenkgabel 2 ist in der Figur 3 wiedergegeben. Zu erkennen sind dort die beiden Gabelteile 9.1, 9.2, 10.1, 10.2, die Flanschteile 11.1, 11.2 und 12.1, 12.2 sowie die mit diesen verbundenen Lagerteile 13.1, 13.2, 14.1, 14.2. Für die Lagerteile 13.2, 14.1 sind ferner die Blindbohrungen 15.2, 16.1 direkt zu erkennen. Ferner zu erkennen ist, dass im demontierten Zustand die Gelenkgabel 2 aus den beiden Gabelteilen 9.1 und 9.2 und die Gelenkgabel 3 aus den Gabelteilen 10.1, 10.2 ausgeführt ist. Die Trennung erfolgt vorzugsweise im Bereich der Symmetrieebene zwischen den beiden Gabelteilen 9.1 und 9.2 bzw. 10.1, 10.2. Diese bildet auch jeweils die Verbindungs- bzw. Koppelbereiche für die Gabelteile 9.1 und 9.2 bzw. 10.1, 10.2, welche vorzugsweise bei symmetrischer Ausführung der Gabelteile 9.1, 9.2 und 10.1, 10.2 durch eine Ebene charakterisiert ist, die durch zwei Senkrechte zur Zapfenachse 7 der in der Gelenkgabel 2 gelagerten Zapfen 5.1, 5.2 bzw. zwei Senkrechte zur Zapfenachse 8 der in der Gelenkgabel 3 gelagerten Zapfen 6.1, 6.2 beschreibbar ist. Die Verbindungsebene ist ferner durch die Gelenkgabelachse G und eine Senkrechte zu dieser charakterisiert. Die beiden Gabelteile 9.1 und 9.2 bzw. 10.1 und 10.2 werden formschlüssig im Koppelbereich 17, 18 miteinander verbunden, so dass eine Relativbewegung in Richtung parallel zur Gelenkgabelachse G vermieden wird. Die beiden Flanschteile 11.1 und 11.2 bzw. 12.1, 12.2 bilden im zusammengesetzten Zustand unter Bildung der Gelenkgabel 2 bzw. 3 einen Flansch 19 bzw. 20 der zum Anschluss an drehmomentübertragende oder weiterleitende Elemente dient. Dieser ist dabei mit einem Anschlussteil an einer anschließenden Welle verbunden, die sowohl auf der An- als auch auf der Abtriebsseite liegen kann. Zum Anschluss sind dabei den Gelenkgabeln 2 und 3 an den zur anschließenden Welle gerichteten Stirnseite 21 bzw. 22, die von den vom Lagerteil 13.1, 13.2 bzw. 14.1, 14.2 weggerichteten Stirnseiten 23.1, 23.2 und 24.1, 24.2 der beiden Flanschteile 11.1, 11.2 und 12.1, 12.2 gebildet werden, Mittel 25.1, 25.2 zur Verbindung mit einem Anschlusselement zugeordnet. Diese können vielgestaltig ausgeführt sein. Im einfachsten Fall sind diese als Mitnahmeelemente 26.1, 26.2 an den Stirnseiten 21 und 22 ausgebildet, die eine drehfeste Verbindung in Umfangsrichtung ermöglichen. Vorzugsweise sind die Mitnahmeelemente 26.1, 26.2 als in radialer Richtung verlaufende und in axialer Richtung ausgerichtete Hirth-Stirnverzahnung ausgebildet. Diese bietet im Zusammenwirken mit einer komplementär dazu angeordneten Hirth-Stirnverzahnung am Anschlussteil eine kraftschlüssige und selbstzentrierende Verbindung. Ferner sind den Gelenkgabelteilen 2, 3 und den Anschlusselementen Mittel 27.1, 27.2 zur Fixierung in axialer Richtung zugeordnet, die die Gelenkgabel 2 bzw. 3 mit den anzuschließenden Wellen verbinden. Diese umfassen im einfachsten Fall Befestigungselemente, die in Gewinde tragende Blindbohrungen 28.1, 28.2 an den Stirnseiten 21, 22 der Gelenkgabeln 2, 3 angeordnet sind. Erfindungsgemäß tragen ferner die beiden zueinander weisenden Stirnseiten 37.1, 37.2 und 38.1, 38.2, welche vorzugsweise senkrecht zur durch die Mitnahmeelemente 26.1, 26.2 aufgespannten Ebene ausgerichtet sind und die Trennebene bzw. den Koppelbereich zwischen den beiden Gabelteilen 9.1, 9.2 und 10.1, 10.2 charakterisieren eine erste Verzahnung 33.11, 33.12, 33.21, 33.22 bzw. 34.11, 34.12, 34.21, 34.22. Diese ist jeweils im Bereich des Außenumfanges der Gabelteile 9.1, 9.2, 10.1, 10.2 an den zueinander weisenden Stirnseiten 37.1, 37.2, 38.1, 38.2 der Fußteile 11.1, 11.2, 12.1, 12.2 angeordnet und erstreckt sich in Richtung zur Gelenkgabelachse G. Die ersten Verzahnungen 33.11, 33.12, 33.21, 33.22, 34.11, 34.12, 34.21, 34.22 sind an ersten Koppelflächen 29.11, 29.12, 29.21, 29.22, 30.11, 30.12, 30.21, 30.22 an den Stirnseiten 37.1, 37.2 bzw. 38.1, 38.2 angeordnet, die Teilflächen dieser bilden. Die Verlängerungen mindestens einer diese erste Verzahnung 33.11, 33.12, 33.21, 33.22, 34.11, 34.12, 34.21, 34.22 charakterisierenden Flankenlinie an der Koppelfläche 29.11, 29.12, 29.21, 29.22, 30.11, 30.12, 30.21, 30.22 oder bei Ausbildung dieser als Bogenverzahnung die Verlängerung der Sekante durch die Endpunkte der Flankenlinie bilden einen Winkel von > 0° bis <180° mit einer Ebene, welche durch die Zapfenachse 7 bzw. 8 des im jeweiligen Gelenkgabelteil 9.1, 9.2 bzw. 10.1, 10.2 gelagerten Zapfens 5.1, 5.2 bzw. 6.1, 6.2 und einer mit einer Rotationsachse der Gelenkgabel 2, 3 zusammenfallenden Gelenkgabelachse G gebildet wird. Vorzugsweise verläuft die erste Verzahnung 33.11, 33.12, 33.21, 33.22, 34.11, 34.12, 34.21, 34.22 jeweils senkrecht zu dieser und ist als gerade Stirnverzahnung ausgebildet. Vorzugsweise wird die Verzahnungsgröße dieser ersten Verzahnung 33.11, 33.12, 33.21, 33.22, 34.11, 34.12, 34.21, 34.22 gleich der der Hirth-Stirnverzahnung an der Unterseite der Flansche 19, 20 gewählt. Dadurch kann der Einsatz gleicher Werkzeuge gewährleistet werden, was sich in einer effektiveren Ausnutzung des bereits vorhandenen Maschinenparks wiederspiegelt. Ferner ist zur Vermeidung von Mikrobewegungen zwischen den einzelnen Gelenkgabelteilen 9.1, 9.2 bzw. 10.1, 10.2 im Koppelbereich an den Koppelflächen 31.1, 31.2 und 32.1, 32.2 jeweils eine weitere zweite Verzahnung 35.1, 35.2 und 36.1, 36.2 vorgesehen, die zwischen den ersten Verzahnungen 33.11 und 33.12 bzw. 33.21 und 33.22 bzw. 34.11 und 34.12 bzw. 34.21, und 34.22 an jedem Fußteil 11.1, 11.2, 12.1 und 12.2 angeordnet ist und in einem Winkel zur ersten Verzahnung 33.11, 33.12, 33.21, 33.22, 34.11, 34.12, 34.21, 34.22 ausgerichtet ist. Die Verlängerungen der die Ausrichtung der Verzahnung 35.1, 35.2, 36.1, 36.2 beschreibenden Flankenlinien oder bei Ausführung als Bogenverzahnung die Verlängerung einer Sekante durch die Endpunkte einer Flankenlinie der zweiten Verzahnung 35.1, 35.2, 36.1, 36.2 sind in einem Winkel zwischen einschließlich 70° und 110° zur Verlängerung einer Flankenlinie der ersten Verzahnung 33.11, 33.12, 33.21, 33.22, 34.11, 34.12, 34.21, 34.22 oder bei Bogenverzahnung zur Verlängerung einer Sekante durch die Endpunkte einer Flankenlinie der ersten Verzahnung 33.11, 33.12, 33.21, 33.22, 34.11, 34.12, 34.21, 34.22 angeordnet.

Die einzelnen Gabelteile 9.1, 9.2, 10.1, 10.2 umfassen ferner, wie bereits beschrieben, einen Flanschteil 11.1, 11.2, 12.1, 12.2 und einen Lagerteil 13.1, 13.2, 14.1, 14.2 der mit dem Flanschteil 11.1, 11.2, 12.1, 12.2 eine Einheit bildet und die Lagerbohrung in Form der Blindbohrung 15.1, 15.2, 16.1, 16.2 trägt. Diese gewährleistet eine steife Lageranschlusskonstruktion. Die Verspannung der beiden Gabelteile 9.1 und 9.2 bzw. 10.1, 10.2 gegeneinander erfolgt in der Regel durch kraftschlüssige Verbindungselemente 39, 40, wobei auch formschlüssige Elemente denkbar sind. Vorzugsweise werden Schraubverbindungen gewählt. Dies gilt in Analogie auch für die Befestigung der einzelnen Gelenkgabeln 2 mit den Anschlusselementen, insbesondere den anschließenden Wellen. Es ist wenigstens ein derartiges Verbindungselement vorgesehen. Vorzugsweise werden pro Gelenkgabel jedoch zwei gewählt. Diese sind mit 39.1, 39.2 für die Durchgangsöffnungen an der Gelenkgabel 2 und 40.1, 40.2 an der Gelenkgabel 3 bezeichnet. Erfindungsgemäß sind die Verbindungselemente in den Bereich des Schwerpunktes der zweiten Verzahnung verlegt oder werden symmetrisch in Richtung zum Aussenumfang des Flansches dieser zugeordnet. Nur damit ergibt sich im Zusammenhang mit der Ausgestaltung des Überganges vom Lagerteil zum Flanschteil frei von Einschnürrungen, d. h. Ausbildung der Gelenkgabel mit Vollflansch die Möglichkeit der gleichmäßigen Belastung der zweiten Verzahnung und auch ersten Verzahnung.

Die erfindungsgemäße Lösung ist dadurch charakterisiert, dass hier in besonders optimaler Form der für eine Kreuzgelenkanordnung theoretisch zur Verfügung stehende Bauraum voll ausgenutzt werden kann und durch eine sehr kompakte Bauweise eine Eignung für Schwerstgelenkwellen und damit zur Übertragung hoher Momente geschaffen werden kann. Diese Ausführung ist aufgrund der Ausbildung der Flanschteile 11.1, 11.2 bzw. 12.1 und 12.2 als Vollflansche 19, 20 mit direktem Übergang frei von Hinterschneidungen bzw. Absätzen zum Lagerteil 13.1, 13.2, 14.1, 14.2 durch einen geringen Fertigungsaufwand charakterisiert, da dieses Bauteil in einfacher Weise hergestellt werden kann. Ferner tragen dazu die Ausbildung des Zapfenkreuzes als Zapfenkreuz 4 mit versetzten Zapfen sowie die zueinander komplementären Verzahnungen 22 in den Trennebenen bei.

Bezugszeichenliste

| | |
|---|---|
| 1 | Kreuzgelenkanordnung |
| 2 | Gelenkgabel |
| 3 | Gelenkgabel |
| 4 | Zapfenkreuz |
| 5.1.5.2 | Zapfen |
| 6.1, 6.2 | Zapfen |
| 7 | Zapfenachse |
| 8 | Zapfenachse |
| 9.1., 9.2 | Gabelteil |
| 10.1, 10.2 | Gabelteil |
| 11.1, 11.2 | Flanschteil |
| 12.1, 12.2 | Flanschteil |
| 13.1,13.2 | Lagerteil |
| 14.1,14.2 | Lagerteil |
| 15.1, 15.2 | Blindbohrung |
| 16.1, 16.2 | Blindbohrung |
| 19 | Flansch |
| 20 | Flansch |
| 21 | Stirnseite |
| 22 | Stirnseite |
| 23.1, 23.2 | Stirnseite |
| 24.1, 24.2 | Stirnseite |
| 25.1, 25.2 | Mittel zur Realisierung einer Drehmomentübertragung in Umfangsrichtung |

| 26.1, 26.2 | Mitnahmeelemente |
|---|---|
| 27.1, 27.2 | Mittel zur axialen Fixierung zwischen Anschlusselement und Gelenkgabel |
| 28.1, 28.2 | Mittel zur axialen Fixierung zwischen Anschlusselement und Gelenkgabel |
| 29.11, 29.12 29.21, 29.22 | Koppelfläche |
| 30.11, 30.12 30.21, 30.22 | Koppelfläche |
| 31.1, 31.2 | Koppelfläche |
| 32.1, 32.2 | Koppelfläche |
| 33.11, 33.12, | erste Verzahnung |
| 33.21, 33.22 | erste Verzahnung |
| 34.11, 34.12, | erste Verzahnung |
| 34.21, 34.22 | erste Verzahnung |
| 35 | zweite Verzahnung |
| 36 | zweite Verzahnung |
| 37.1, 37.2 | Stirnseite |
| 38.1, 38.2 | Stirnseite |
| 39, 39.1, 39.2 | Verbindungselement |
| 40, 40.1, 40.2 | Verbindungselement |

**Patentansprüche**

1.  Kreuzgelenkanordnung (1) für den Einsatz in Gelenkwellen, insbesondere Schwerstgelenkwellen;

    1.1 mit einem Zapfenkreuz (4), welches in zwei um 90° zueinander versetzt angeordneten Gelenkgabeln (2, 3) gelagert ist;

    1.2 jede Gelenkgabel (2, 3) umfasst zwei Gelenkgabelteile (9.1, 9.2, 10.1, 10.2);

    1.3 jeder Gelenkgabelteil (9.1, 9.2, 10.1, 10.2) umfasst einen Fußteil (11.1, 11.2, 12.1, 12.2) und einen Lagerteil (13.1, 13.2, 14.1, 14.2) zur Lagerung der Zapfen (5.1, 5.2, 6.1, 6.2) des Zapfenkreuzes (4);

    1.4 jeder einzelne Fußteil (11.1, 11.2, 12.1, 12.2), trägt an der vom Lagerteil (13.1, 13.2, 14.1, 14.2) wegweisenden Stirnseite (21, 22) Mittel zur Kopplung mit komplementären Mitteln in Form von Mitnahmeelementen (26.1, 26.2) am Anschlusselement;

    1.5 die Gelenkgabelteile (9.1, 9.2, 10.1, 10.2) sind im Bereich ihrer Fußteile (11.1, 11.2, 12.1, 12.2) in Koppelflächen (29.11, 29.12, 29.21, 29.22, 30.11, 30.12, 30.21, 30.22, 31.1, 31.2, 32.1, 32.2) bildenden Koppelbereichen formschlüssig miteinander verbindbar, wobei die Koppelbereiche durch eine Ebene charakterisiert sind, die senkrecht zur durch die Mitnahmeelemente (26.1, 26.2) aufgespannten Ebene ausgerichtet sind;

    1.6 die Fußteile (11.1, 11.2, 12.1, 12.2) der Gelenkgabelteile (9.1, 9.2, 10.1, 10.2) weisen an ihrer zum Fußteil (11.1, 11.2, 12.1, 12.2) des jeweils anderen Gelenkgabelteiles (10.1, 10.2, 9.1, 9.2) weisenden Koppelfläche (29.11, 29.12, 29.21, 29.22, 30.11, 30.12, 30.21, 30.22, 31.1, 31.2, 32.1, 32.2) im Bereich des Außenumfanges des Fußteils eine zueinander komplementäre erste Verzahnung (33.11, 33.12, 33.21, 33.22, 34.11, 34.12, 34.21, 34.22) auf;

    1.7 die Verlängerungen mindestens einer die erste Verzahnung (33.11, 33.12, 33.21, 33.22, 34.11, 34.12, 34.21, 34.22) charakterisierenden Flankenlinie an der Koppelfläche oder bei einer Bogenverzahnung die Verlängerung der Sekante durch die Endpunkte der Flankenlinie bilden einen Winkel von > 0° bis <180° mit einer Ebene, welche durch die Zapfenachse (7) des in einem Gelenkgabelteils (9.1, 9.2, 10.1, 10.2) gelagerten Zapfens (5.1, 5.2) und einer mit einer Rotationsachse der Gelenkgabel (2, 3) zusammenfallenden Gelenkgabelachse (G) gebildet wird;

    1.8 mit jeweils einer an den zueinander weisenden Koppelflächen im Bereich der Gelenkgabelachse (G) ausgebildeten weiteren zweiten Verzahnung (35.1, 35.2);

    1.9 die Verlängerungen der die Ausrichtung der Verzahnung beschreibenden Flankenlinien der zweiten Verzahnung (35.1, 35.2) oder bei Ausführung als Bogenverzahnung die Verlängerung einer Sekante durch die Endpunkte einer Flankenlinie ($F_L$) der zweiten Verzahnung (35.1, 35.2) sind in einem Winkel zwischen einschließlich 70° und 110° zur Verlängerung einer Flankenlinie der ersten Verzahnung (33.11, 33.12, 33.21, 33.22, 34.11, 34.12, 34.21, 34.22) oder bei Bogenverzahnung zur Verlängerung einer Sekante durch die Endpunkte einer Flankenlinie ($F_L$) der ersten Verzahnung (33.11, 33.12, 33.21, 33.22, 34.11, 34.12, 34.21, 34.22) angeordnet; **dadurch gekennzeichnet, daß**

    1.10 der einzelne Fußteil (9.1, 9.2, 10.1, 10.2) als Vollflansch ausgeführt ist und sich frei von Absätzen an den Lagerteil (11.1, 11.2, 12.1, 12.2) an schließt

    1.11 das Zapfenkreuz (4) zwei zueinander um 90° versetzt angeordnete Zapfenanordnungen aus zwei um 180° zueinander versetzt angeordneten und auf einer gemeinsamen Achse angeordneten Zapfen (5.1, 5.2, 6.1, 6.2) umfasst, die in zueinander parallelen Ebenen angeordnet sind;

1.12 jeder einzelne Lagerteil (13.1, 13.2, 14.1, 14.2) zur Aufnahme der Zapfen (5.1, 5.2, 6.1, 6.2) mit einer Blindbohrung (15.1, 15.2, 16.1, 16.2) ausgeführt ist;

1.13 die Gelenkgabelteile einer Gelenkgabel im Bereich des Fußteiles (11.1, 11.2, 12.1, 12.2) über Verbindungselemente miteinander verbunden sind, wobei die Verbindungselemente sich im Bereich des Schwerpunktes der zweiten Verzahnung durch den Fußteil erstrecken.

2. Kreuzgelenkanordnung (1) nach Anspruch 1, **dadurch gekennzeichnet, dass** die einzelnen, die erste (33.11, 33.12, 33.21, 33.22, 34.11, 34.12, 34.21, 34.22) und zweite Verzahnung (35.1, 35.2, 36.1, 36.2) tragenden Koppelflächen (29.11, 29.12, 29.21, 29.22, 30.11, 30.12, 30.21, 30.22, 31.1, 31.2, 32.1, 32.2) eines jeden Gelenkgabelteiles (9.1, 9.2, 10.1. 10.2) in einer Ebene angeordnet sind.

3. Kreuzgelenkanordnung (1) nach Anspruch 1, **dadurch gekennzeichnet, dass** die einzelnen Koppelflächen (29.11, 29.12, 29.21, 29.22, 30.11, 30.12, 30.21, 30.22, 31.1, 31.2, 32.1, 32.2) für die erste (33.11, 33.12, 33.21, 33.22, 34.11, 34.12, 34.21, 34.22) und zweite Verzahnung (35.1, 35.2, 36.1, 36.2) eines jeden Gelenkgabelteiles (9.1, 9.2. 10.1, 10.2) in unterschiedlichen Ebenen angeordnet sind.

4. Kreuzgelenkanordnung (1) nach einem der Ansprüche 1 bis 3, **dadurch gekennzeichnet, dass** die Verlängerung der Flankenlinien der ersten Verzahnung (33.11, 33.12, 33.21, 33.22, 34.11, 34.12, 34.21, 34.22) oder bei einer Bogenverzahnung der Sekante durch die Endpunkte der Flankenlinie ($F_L$) senkrecht zu einer Ebene verläuft, welche durch die Zapfenachse (7, 8) des in der Gelenkgabel (2, 3) gelagerten Zapfens (5.1, 5.2, 6.1, 6.2) und einer mit einer Rotationsachse der Gelenkgabel (2, 3) zusammenfallenden Gelenkgabelachse (G) charakterisiert wird.

5. Kreuzgelenkanordnung (1) nach einem der Ansprüche 1 bis 4, **dadurch gekennzeichnet, dass** an der vom Lagerteil (13.1, 13.2, 14.1, 14.2) wegweisenden Stirnseite (23.1, 23.2, 24.1, 24.2) des Fußteiles (11.1, 11.2, 12.1, 12.2) Mittel (25.1, 25.2, 26.1, 26.2, 27.1, 27.2, 28.1, 28.2) zur Kopplung mit komplementären Mitteln an einem Anschlusselement zur Drehmomentübertragung auf das Anschlusselement und zur Zentrierung von Anschlusselement und Fußteil (11.1, 11.2, 12.1, 12.2) zur Vermeidung einer Relativbewegung in einer Ebene, die den Koppelbereich zwischen Gelenkgabelteil (9.1, 9.2, 10.1, 10.2) und Anschlusselement charakterisiert und senkrecht zur Ebene, welche von der Zapfenachse (7, 8) des im Gelenkgabelteil (9.1, 9.2, 10.1, 10.2) gelagerten Zapfens (5.1, 5.2, 6.1, 6.2) und der mit der Rotationsachse der Gelenkgabel (2, 3) zusammenfallenden Gelenkgabelachse (G) gebildet wird, ausgerichtet ist.

6. Kreuzgelenkanordnung (1) nach Anspruch 5, **dadurch gekennzeichnet, dass** die Mittel (25.1, 25.2, 26.1, 26.2, 27.1, 27.2, 28.1, 28.2) wenigstens eine wenigstens segmentweise über den gesamten Umfang an der an der vom Lagerteil (13.1, 13.2, 14.1, 14.2) wegweisenden Stirnseite (23.1, 23.2, 24.1, 24.2) des Fußteiles (11.1, 11.2, 12.1, 12.2) ausgebildete axial ausgerichtete und in radialer Richtung verlaufende Stirn oder Hirth-Stirnverzahnung umfassen.

7. Kreuzgelenkanordnung (1) nach einem der Ansprüche 5 oder 6, **dadurch gekennzeichnet, dass** die Mittel (25.1, 25.2, 26.1, 26.2, 27.1, 27.2, 28.1, 28.2) zur Kopplung mit komplementären Mitteln an einem Anschlusselement (25) Gewinde tragende Blindbohrungen (28.1, 28.2) am Fußteil (11.1, 11.2, 12.1, 12.2) umfassen, die parallel zur Gabelachse (G) ausgerichtet sind.

8. Kreuzgelenkanordnung (1) nach einem der Ansprüche 1 bis 7, **dadurch gekennzeichnet, dass** die Verlängerung der Flankenlinien der zweiten Verzahnung (31.1, 31.2, 32.1, 32.2) oder bei einer Bogenverzahnung der Sekante durch die Endpunkte einer Flankenlinie der zweiten Verzahnung (31.1, 31.2, 32.1, 32.2) parallel zur Gelenkgabelachse (G) verläuft.

9. Kreuzgelenkanordnung (1) nach einem der Ansprüche 1 bis 8, **dadurch gekennzeichnet, dass** zwischen der zweiten Verzahnung (31.1, 31.2, 32.1, 32.2) und der ersten Verzahnung (33.11, 33.12, 33.21, 33.22, 34.11, 34.12, 34.21, 34.22) an der Stirnseite (37.1, 37.2, 38.1, 38.2) jeweils ein Abstand bestimmter Größe vorgesehen ist, welcher von einem frei von einer Verzahnung ausgeführten Flächenbereich gebildet wird.

10. Kreuzgelenkanordnung (1) nach einem der Ansprüche 1 bis 9, **gekennzeichnet durch** die folgenden Merkmale:

10.1 die zweite Verzahnung (31.1, 31.2, 32.1, 32.2) an jedem Gelenkgabelteil (9.1, 9.2, 10.1, 10.2) umfasst zwei Teilverzahnungen - eine erste Teilverzahnung und eine zweite Teilverzahnung;

10.2 die beiden Teilverzahnungen sind in einem Abstand von der Gelenkgabelachse (G) angeordnet.

11. Kreuzgelenkanordnung (1) nach einem der Ansprüche 1 bis 10, **dadurch gekennzeichnet, dass** der Achsversatz der einzelnen Zapfachsen der in einer Gelenkgabel gelagerten Zapfenanordnung (5.1, 5.2, 6.1, 6.2) des Zapfenkreuzes (4) in einem Bereich von einschließlich $\dfrac{Rota}{5}$ bis einschließlich $\dfrac{Rota}{7}$ liegt, wobei Rota den Rotationsdurchmesser charakterisiert.

**Claims**

1. A universal joint configuration (1) for use in propeller shafts, in particular heavy-duty propeller shafts;

   1.1 having a journal cross assembly (4), which is mounted in two yokes (2, 3) situated offset to one another by 90°;

   1.2 each yoke (2, 3) comprises two yoke parts (9.1, 9.2, 10.1, 10.2);

   1.3 each yoke part (9.1, 9.2, 10.1, 10.2) comprises a base part (11.1, 11.2, 12.1, 12.2) and a bearing part (13.1, 13.2, 14.1, 14.2) for mounting the journals (5.1, 5.2, 6.1, 6.2) of the journal cross assembly (4);

   1.4 each individual base part (11.1, 11.2, 12.1, 12.2) carries means, on the front side (21, 22) pointing away from the bearing part (13.1, 13.2, 14.1, 14.2), for coupling to complementary means in the form of tappet elements (26.1, 26.2) on the attachment element;

   1.5 the yoke parts (9.1, 9.2, 10.1, 10.2) are connectable to one another in a formfitting way in the area of their base parts (11.1, 11.2, 12.1, 12.2) in coupling surfaces (29.11, 29.12, 29.21, 29.22, 30.11, 30.12, 30.21, 30.22, 31.1, 31.2, 32.1, 32.2) forming coupling areas, the coupling areas being **characterized by** a plane which is oriented perpendicularly to the plane spanned by the tappet elements (26.1, 26.2);

   1.6 the base parts (11.1, 11.2, 12.1, 12.2) of the yoke parts (9.1, 9.2, 10.1, 10.2) have first teeth (33.11, 33.12, 33.21, 33.22, 34.11, 34.12, 34.21, 34.22) complementary to one another on their coupling surface (29.11, 29.12, 29.21, 29.22, 30.11, 30.12, 30.21, 30.22, 31.1, 31.2, 32.1, 32.2) pointing toward the base part (11.1, 11.2, 12.1, 12.2) of the particular other yoke part (10.1, 10.2, 9.1, 9.2) in the area of the external circumference of the base part;

   1.7 the extensions of at least one flank line characterizing the first teeth (33.11, 33.12, 33.21, 33.22, 34.11, 34.12, 34.21, 34.22) on the coupling surface or, with spiral teeth, the extension of the secants through the terminal points of the flank line form an angle of > 0° to < 180° with a plane which is formed by the journal axis (7) of the journal (5.1, 5.2) mounted in a yoke part (9.1, 9.2, 10.1, 10.2) and a yoke axis (G) coincident with a rotational axis of the yoke (2, 3);

   1.8 having further second teeth (35.1, 35.2) implemented on each of the coupling surfaces pointing toward one another in the area of the yoke axis (G);

   1.9 the extensions of the flank lines of the second teeth (35.1, 35.2) describing the orientation of the teeth or, in an embodiment as spiral teeth, the extension of a secant through the terminal points of a flank line ($F_L$) of the second teeth (35.1, 35.2) are situated in an angle between 70° and 110°, inclusive, to the extension of a flank line of the first teeth (33.11, 33.12, 33.21, 33.22, 34.11, 34.12, 34.21, 34.22) or, with spiral teeth, to the extension of a secant through the terminal points of a flank line ($F_L$) of the first teeth (33.11, 33.12, 33.21, 33.22, 34.11, 34.12, 34.21, 34.22),

   **characterized in that**

   1.10 the individual base part (9.1, 9.2, 10.1, 10.2) is implemented as a solid flange and adjoins the journal part (11.1, 11.2, 12.1, 12.2) without steps,

   1.11 the journal cross assembly (4) comprises two journal configurations, situated offset to one another by 90°, made of two journals (5.1, 5.2, 6.1, 6.2) situated offset to one another by 180° and situated on a shared axis, which are situated in planes parallel to one another;

   1.12 each individual bearing part (13.1, 13.2, 14.1, 14.2) for receiving the journals (5.1, 5.2, 6.1, 6.2) is implemented having a pocket hole (15.1, 15.2, 16.1, 16.2);

   1.13 the yoke parts of a yoke are connected to one another via connection elements in the area of the base part (11.1, 11.2, 12.1, 12.2), the connection elements extending through the base part in the area of the center of mass of the second teeth.

2. The universal joint configuration (1) according to Claim 1, **characterized in that** the individual coupling surfaces (29.11, 29.12, 29.21, 29.22, 30.11, 30.12, 30.21, 30.22, 31.1, 31.2, 32.1, 32.2), carrying the first (33.11, 33.12, 33.21, 33.22, 34.11, 34.12, 34.21, 34.22) and second teeth (35.1, 35.2, 36.1, 36.2), of each yoke part (9.1, 9.2, 10.1, 10.2) are situated in one plane.

3. The universal joint configuration (1) according to Claim 1, **characterized in that** the individual coupling surfaces (29.11, 29.12, 29.21, 29.22, 30.11, 30.12, 30.21, 30.22, 31.1, 31.2, 32.1, 32.2) for the first (33.11, 33.12, 33.21, 33.22, 34.11, 34.12, 34.21, 34.22) and second teeth (35.1, 35.2, 36.1, 36.2) of each yoke part (9.1, 9.2, 10.1, 10.2) are situated in different planes.

4. The universal joint configuration (1) according to one of Claims 1 through 3, **characterized in that** the extension of the flank lines of the first teeth (33.11, 33.12, 33.21, 33.22, 34.11, 34.12, 34.21, 34.22) or, for spiral teeth, the secant through the terminal points of the flank line ($F_L$) runs perpendicular to a plane which is **characterized by** the journal axis (7, 8) of the journal (5.1, 5.2, 6.1, 6.2) mounted in the yoke (2, 3) and a yoke axis (G) coincident with a rotational axis of the yoke (2, 3).

5. The universal joint configuration (1) according to one of Claims 1 through 4, **characterized in that**, on the front side (23.1, 23.2, 24.1, 24.2) of the base part (11.1, 11.2, 12.1, 12.2) pointing away from the bearing part (13.1, 13.2, 14.1, 14.2), means (25.1, 25.2, 26.1, 26.2, 27.1, 27.2, 28.1, 28.2) are aligned for coupling with complementary means on an attachment element for torque transmission to the attachment element and for centering of attachment element and base part (11.1, 11.2, 12.1, 12.2) to avoid a relative movement in a plane which characterizes the coupling area between yoke part (9.1, 9.2, 10.1, 10.2) and attachment element and perpendicular to the plane which is formed by the journal axis (7, 8) of the journal (5.1, 5.2, 6.1, 6.2) mounted in the yoke part (9.1, 9.2, 10.1, 10.2) and the yoke axis (G) coincident with the rotational axis of the yoke (2, 3).

6. The universal joint configuration (1) according to Claim 5, **characterized in that** the means (25.1, 25.2, 26.1, 26.2, 27.1, 27.2, 28.1, 28.2) comprise at least one set of axially oriented frontal or Hirth frontal teeth implemented at least in segments over the entire circumference on the front side (23.1, 23.2, 24.1, 24.2) of the base part (11.1, 11.2, 12.1, 12.2) pointing away from the bearing part (13.1, 13.2, 14.1, 14.2) and running in the radial direction.

7. The universal joint configuration (1) according to one of Claims 5 or 6, **characterized in that** the means (25.1, 25.2, 26.1, 26.2, 27.1, 27.2, 28.1, 28.2) comprise pocket holes (28.1, 28.2) on the base part (11.1, 11.2, 12.1, 12.2), which are oriented parallel to the yoke axis (G), for coupling with complementary means on an attachment element (25).

8. The universal joint configuration (1) according to one of Claims 1 through 7, **characterized in that** the extension of the flank lines of the second teeth (31.1, 31.2, 32.1, 32.2), or, for spiral teeth, the secant through the terminal points of a flank line of the second teeth (31.1, 31.2, 32.1, 32.2) runs parallel to the yoke axis (G).

9. The universal joint configuration (1) according to one of Claims 1 through 8, **characterized in that** a spacing of specific size, which is formed by a surface area implemented free of teeth, is provided in each case between the second teeth (31.1, 31.2, 32.1, 32.2) and the first teeth (33.11, 33.12, 33.21, 33.22, 34.11, 34.12, 34.21, 34.22) on the front side (37.1, 37.2, 38.1, 38.2).

10. The universal joint configuration (1) according to one of Claims 1 through 9, **characterized by** the following features:

    10.1 the second teeth (31.1, 31.2, 32.1, 32.2) on each yoke part (9.1, 9.2, 10.1, 10.2) comprise two partial sets of teeth - a first partial set of teeth and a second partial set of teeth;
    10.2 the two partial sets of teeth are situated at a distance from the yoke axis (G).

11. The universal joint configuration (1) according to one of Claims 1 through 10, **characterized in that** the axial offset of the individual journal axes of the journal configuration (5.1, 5.2, 6.1, 6.2) of the journal cross assembly (4) mounted in a yoke is in a range from $\dfrac{rota}{5}$ to $\dfrac{rota}{7}$ inclusive, Rota characterizing the rotational diameter.

**Revendications**

1. Dispositif de joint de cardan (1) destiné à être utilisé dans des arbres de transmission à joint de cardan, en particulier des arbres de transmission très lourds,

1.1 avec un croisillon (4) supporté dans deux fourches d'articulation (2, 3) décalées de 90° l'une par rapport à l'autre ;

1.2 chaque fourche d'articulation (2, 3) comprend deux parties de fourche d'articulation (9.1, 9.2, 10.1, 10.2) ;

1.3 chaque partie de fourche d'articulation (9.1, 9.2, 10.1, 10.2) comprend une partie de pied (11.1, 11.2, 12.1, 12.2) et une partie de palier (13.1, 13.2, 14.1, 14.2) pour supporter le tourillon (5.1, 5.2, 6.1, 6.2) du croisillon (4) ;

1.4 chaque partie de pied (11.1, 11.2, 12.1, 12.2), porte sur la face d'extrémité (21, 22) orientée à l'opposé de la partie de palier (13.1, 13.2, 14.1, 14.2) des moyens pour le couplage avec des moyens complémentaires prenant la forme d'éléments entraîneurs (26.1, 26.2) sur l'élément de raccordement ;

1.5 les parties de fourche d'articulation (9.1, 9.2, 10.1, 10.2) peuvent être assemblées l'une à l'autre par engagement positif au niveau de leurs parties de pied (11.1, 11.2, 12.1, 12.2) dans des zones de couplage formant des surfaces de couplage (29.11, 29.12, 29.21, 29.22, 30.11, 30.12, 30.21, 30.22, 31.1, 31.2, 32.1, 32.2), les zones de couplage étant **caractérisées par** un plan perpendiculaire au plan défini par les éléments entraîneurs (26.1, 26.2) ;

1.6 les parties de pied (11.1, 11.2, 12.1, 12.2) des parties de fourche d'articulation (9.1, 9.2, 10.1, 10.2) présentent sur leur surface de couplage (29.11, 29.12, 29.21, 29.22, 30.11, 30.12, 30.21, 30.22, 31.1, 31.2, 32.1, 32.2) orientée vers la partie de pied (11.1, 11.2, 12.1, 12.2) de l'autre partie de fourche d'articulation (10.1, 10.2, 9.1, 9.2) au niveau de la circonférence extérieure de la partie de pied une première denture (33.11, 33.12, 33.21, 33.22, 34.11, 34.12, 34.21, 34.22) complémentaire de l'autre ;

1.7 les prolongations d'au moins une développante de flanc caractérisant la première denture (33.11, 33.12, 33.21, 33.22, 34.11, 34.12, 34.21, 34.22) sur la surface de couplage ou, dans une denture courbe, la prolongation de la sécante passant par les points d'extrémité de la caractéristique de flanc, forment un angle de > 0° à <180° avec un plan passant par l'axe de tourillon (7) du tourillon (5.1, 5.2) supporté dans une partie de fourche d'articulation (9.1, 9.2, 10.1, 10.2) et un axe de fourche d'articulation (G) coïncidant avec l'axe de rotation de la fourche d'articulation (2, 3) ;

1.8 avec une deuxième denture (35.1, 35.2) formée sur chacune des surfaces de couplage tournées l'une vers l'autre au niveau de l'axe de la fourche d'articulation (G) ;

1.9 les prolongations des développantes de flanc de la deuxième denture (35.1, 35.2) décrivant l'orientation de la denture ou, dans la réalisation sous forme de denture courbe, la prolongation d'une sécante passant par les points d'extrémité d'une développante de flanc ($F_L$) de la deuxième denture (35.1, 35.2), sont disposées selon un angle compris entre 70° et 110° inclus par rapport à la prolongation d'une développante de flanc de la première denture (33.11, 33.12, 33.21, 33.22, 34.11, 34.12, 34.21, 34.22) ou, dans une denture courbe, à la prolongation d'une sécante passant par les points d'extrémité d'une développante de flanc ($F_L$) de la première denture (33.11, 33.12, 33.21, 33.22, 34.11, 34.12, 34.21, 34.22),

**caractérisé en ce que**

1.10 chaque partie de pied (9.1, 9.2, 10.1, 10.2) est réalisée comme une bride pleine et se raccorde sans épaulements à la partie de palier (11.1, 11.2, 12.1, 12.2) ;

1.11 le croisillon (4) comprend deux dispositifs de tourillon décalés l'un de l'autre de 90°, formés par deux tourillons (5.1, 5.2, 6.1, 6.2) décalés l'un de l'autre de 180° et disposés sur un axe commun, qui sont disposés dans des plans parallèles l'un à l'autre ;

1.12 chaque partie de palier (13.1, 13.2, 14.1, 14.2) est pourvue d'un trou borgne (15.1, 15.2, 16.1, 16.2) pour recevoir les tourillons (5.1, 5.2, 6.1, 6.2) ;

1.13 les parties de fourche d'articulation d'une fourche d'articulation sont reliées entre elles au niveau de la partie de pied (11.1, 11.2, 12.1, 12.2) par des éléments de liaison, lesquels éléments de liaison s'étendent à travers la partie de pied au niveau du centre de gravité de la deuxième denture.

2. Dispositif de joint de cardan (1) selon la revendication 1, **caractérisé en ce que** les différentes surfaces de couplage (29.11, 29.12, 29.21, 29.22, 30.11, 30.12, 30.21, 30.22, 31.1, 31.2, 32.1, 32.2) de chaque partie de fourche d'articulation (9.1, 9.2, 10.1. 10.2) portant la première denture (33.11, 33.12, 33.21, 33.22, 34.11, 34.12, 34.21, 34.22) et la deuxième (35.1, 35.2, 36.1, 36.2) sont disposées dans un plan.

3. Dispositif de joint de cardan (1) selon la revendication 1, **caractérisé en ce que** les différentes surfaces de couplage (29.11, 29.12, 29.21, 29.22, 30.11, 30.12, 30.21, 30.22, 31.1, 31.2, 32.1, 32.2) de chaque partie de fourche d'articulation (9.1, 9.2. 10.1, 10.2) pour la première denture (33.11, 33.12, 33.21, 33.22, 34.11, 34.12, 34.21, 34.22) et la deuxième (35.1, 35.2, 36.1, 36.2) sont disposées dans des plans différents.

4. Dispositif de joint de cardan (1) selon l'une des revendications 1 à 3, **caractérisé en ce que** la prolongation des développantes de flanc de la première denture (33.11, 33.12, 33.21, 33.22, 34.11, 34.12, 34.21, 34.22) ou, pour une denture courbe, de la sécante passant par les points d'extrémité de la développante de flanc $(F_L)$ est perpendiculaire à un plan qui est **caractérisé par** l'axe de tourillon (7, 8) du tourillon (5.1, 5.2, 6.1, 6.2) supporté dans la fourche d'articulation (2, 3) et par un axe de fourche d'articulation (G) coïncidant avec l'axe de rotation de la fourche d'articulation (2, 3).

5. Dispositif de joint de cardan (1) selon l'une des revendications 1 à 4, **caractérisé en ce qu'**il est prévu sur la face d'extrémité (23.1, 23., 24.1, 24.2) de la partie de pied (11.1, 11.2, 12.1, 12.2) orientée à l'opposé de la partie de palier (13.1, 13.2, 14.1, 14.2) des moyens (25.1, 25.2, 26.1, 26.2, 27.1, 27.2, 28.1, 28.2) pour le couplage avec des moyens complémentaires sur un élément de raccordement pour la transmission du couple de rotation à l'élément de raccordement et pour le centrage de l'élément de raccordement et de la partie de pied (11.1, 11.2, 12.1, 12.2) en vue d'éviter un mouvement relatif dans un plan caractérisant la zone de couplage entre la partie de fourche d'articulation (9.1, 9.2, 10.1, 10.2) et l'élément de raccordement et orienté perpendiculairement au plan formé par l'axe de tourillon (7, 8) du tourillon (5.1, 5.2, 6.1, 6.2) supporté dans la partie de fourche d'articulation (9.1, 9.2, 10.1, 10.2) et l'axe de fourche d'articulation (G) coïncidant avec l'axe de rotation de la fourche d'articulation (2, 3).

6. Dispositif de joint de cardan (1) selon la revendication 5, **caractérisé en ce que** les moyens (25.1, 25.2, 26.1, 26.2, 27.1, 27.2, 28.1, 28.2) comprennent au moins une denture droite ou une denture Hirth orientée dans le sens axial et s'étendant dans le sens radial au moins par segments sur toute la circonférence de la face d'extrémité (23.1, 23.2, 24.1, 24.2) de la partie de pied (11.1, 11.2, 12.1, 12.2) orientée à l'opposé de la partie de palier (13.1, 13.2, 14.1, 14.2).

7. Dispositif de joint de cardan (1) selon l'une des revendications 5 ou 6, **caractérisé en ce que** les moyens (25.1, 25.2, 26.1, 26.2, 27.1, 27.2, 28.1, 28.2) pour le couplage avec des moyens complémentaires comprennent des trous borgnes (28.1, 28.2) portant un filetage sur un élément de raccordement (25) sur la partie de pied (11.1, 11.2, 12.1, 12.2), qui sont orientés parallèlement à l'axe de la fourche (G).

8. Dispositif de joint de cardan (1) selon l'une des revendications 1 à 7, **caractérisé en ce que** la prolongation des développantes de flanc de la deuxième denture (31.1, 31.2, 32.1, 32.2) ou, pour une denture courbe, de la sécante passant par les points d'extrémité d'une développante de flanc de la deuxième denture (31.1, 31.2, 32.1, 32.2), est parallèle à l'axe de la fourche d'articulation (G).

9. Dispositif de joint de cardan (1) selon l'une des revendications 1 à 8, **caractérisé en ce qu'**il est prévu entre la deuxième denture (31.1, 31.2, 32.1, 32.2) et la première denture (33.11, 33.12, 33.21, 33.22, 34.11, 34.12, 34.21, 34.22) sur la face d'extrémité (37.1, 37.2, 38.1, 38.2) un écart d'une certaine grandeur qui est formé par une partie de surface dépourvue de denture.

10. Dispositif de joint de cardan (1) selon l'une des revendications 1 à 9,
    **caractérisé en ce que :**

    10.1 la deuxième denture (31.1, 31.2, 32.1, 32.2) de chaque partie d'articulation (9.1, 9.2, 10.1, 10.2) comprend deux dentures partielles, une première denture partielle et une deuxième denture partielle ;
    10.2 les deux dentures partielles sont disposées à distance de l'axe de la fourche d'articulation (G).

11. Dispositif de joint de cardan (1) selon l'une des revendications 1 à 10, **caractérisé en ce que** le décalage d'axe des axes de tourillon d'un dispositif de tourillons (5.1, 5.2, 6.1, 6.2) du croisillon (4) disposé dans une fourche d'articulation se situe dans une plage de $\dfrac{rota}{5}$ inclus à $\dfrac{rota}{7}$ inclus, rota caractérisant le diamètre de rotation.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0206026 A1
- DE 4313141 C2
- DE 10037866 A1